Europäisches Patentamt

**European Patent Office** (11) Numéro de publication: **0 227 500**

Office européen des brevets **B1**

(12) **FASCICULE DE BREVET EUROPEEN**

(45) Date de publication du fascicule du brevet: (51) Int. Cl.⁴: **B60R 22/20**
**24.05.89**

(21) Numéro de dépôt: **86402339.5**

(22) Date de dépôt: **17.10.86**

---

(54) **Dispositif de réglage perfectionné de la position d'un renvoi de sangle, notamment de ceinture de sécurité pour véhicule automobile.**

---

(30) Priorité: **24.10.85 FR 8515831**
**07.02.86 FR 8601717**

(73) Titulaire: **ECIA - EQUIPEMENTS ET COMPOSANTS POUR L'INDUSTRIE AUTOMOBILE, F-25400 Audincourt (Doubs)(FR)**

(43) Date de publication de la demande:
**01.07.87 Bulletin 87/27**

(72) Inventeur: **Escaravage, Gérard, Impasse des Graverots, F-25700 - Valentigney(FR)**

(45) Mention de la délivrance du brevet:
**24.05.89 Bulletin 89/21**

(74) Mandataire: **Moncheny, Michel et al, c/o Cabinet Lavoix 2 Place d'Estienne d'Orves, F-75441 Paris Cedex 09(FR)**

(84) Etats contractants désignés:
**DE ES GB IT SE**

(56) Documents cités:
**EP-A- 0 092 105**
**EP-A- 0 136 166**
**FR-A- 2 107 446**

ACTORUM AG

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un doigt d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connait dans l'état de la technique un certain nombre de dispositifs mécaniques de réglage de la hauteur de ce renvoi de sangle.

Le EP-A 0 092 105 décrit un dispositif de réglage de la position d'un renvoi de sangle de ceinture, ce dispositif étant muni d'un moteur électrique que fait tourner un arbre fileté. Le renvoi de sangle est monté sur une pièce taraudée qui coopère avec l'arbre fileté.

Cependant, ces dispositifs présentent un certain nombre d'inconvénients, notamment au niveau des possibilités de réglage, de leur structure relativement complexe et donc de leurs coûts de fabrication et de montage relativement élevés.

Le but de l'invention est de résoudre les problèmes évoqués ci-dessus en proposant un dispositif de réglage, rapide et précis, de la position du renvoi de sangle, pour adapter celle-ci à la morphologie de l'utilisateur.

A cet effet, l'invention a pour objet un dispositif de réglage de la position d'un renvoi de sangle notamment de ceinture de sécurité pour véhicule automobile, dans lequel le renvoi de sangle est monté déplaçable entre deux positions extrêmes par l'intermédiaire de moyens d'entraînement comportant un moteur électrique alimenté par l'intermédiaire d'un organe de commande de la position dudit renvoi, en tout point de la course de celui-ci, définie par les deux positions extrêmes, le renvoi de sangle étant disposé sur un doigt d'ancrage, caractérisé en ce que le doigt d'ancrage est solidaire du moteur électrique, ledit moteur électrique étant monté déplaçable axialement entre lesdites deux positions extrêmes, dans un tube et en ce qu'il est prévu des moyens d'immobilisation en rotation de l'induit du moteur électrique, l'inducteur de celui-ci étant monté à rotation autour de l'induit, en ce qu'au moins une partie de la surface extérieure de l'inducteur du moteur présente un filetage coopérant avec des moyens complémentaires solidaires du tube de manière à assurer le déplacement du moteur et donc du renvoi de sangle lors de la rotation de l'inducteur, et en ce que les moyens d'immobilisatin en rotation de l'induit sont constitués par le doigt d'ancrage du renvoi de sangle, l'une des extrémités de ce doigt faisant saillie à l'intérieur du tube à travers und fente ménagée dans celui-ci, cette extrémité du doigt d'ancrage étant reliée à l'une des extrémités de l'arbre de l'induit du moteur électrique par des moyens de fixation.

L'invention sera mieux comprise à l'aide de la description qui va suivre, donnée uniquement à titre d'exemple et faite en se référant aux dessins annexés, sur lesquels:

– la Fig. 1 représente une vue d'un habitacle d'un véhicule automobile équipé d'un dispositif de réglage selon l'invention;

– la Fig. 2 représente une vue en perspective avec des parties coupées d'un dispositif de réglage selon l'invention;

– la Fig. 3 représente une vue en coupe d'un dispositif de réglage selon l'invention;

– les Fig. 4 et 5 représentent des vues à échelle agrandie de moyens de liaison entrant dans la constitution d'un dispositif selon l'invention;

- la Fig.6 représente un premier mode de réalisation des moyens d'alimentation entrant dans la constitution d'un dispositif selon l'invention ;

- la Fig. 7 représente une vue en coupe d'une variante de réalisation d'un dispositif de réglage selon l'invention;

- la Fig.8 représente un second mode de réalisation des moyens d'alimentation entrant dans la constitution d'un dispositif de l'invention;

- la Fig.9 représente une vue en coupe à échelle agrandie suivant la ligne IX-IX de la Fig.8; et

- les Fig.10 et 11 représentent un troisième mode de réalisation des moyens d'alimentation entrant dans la constitution d'un dispositif selon l'invention.

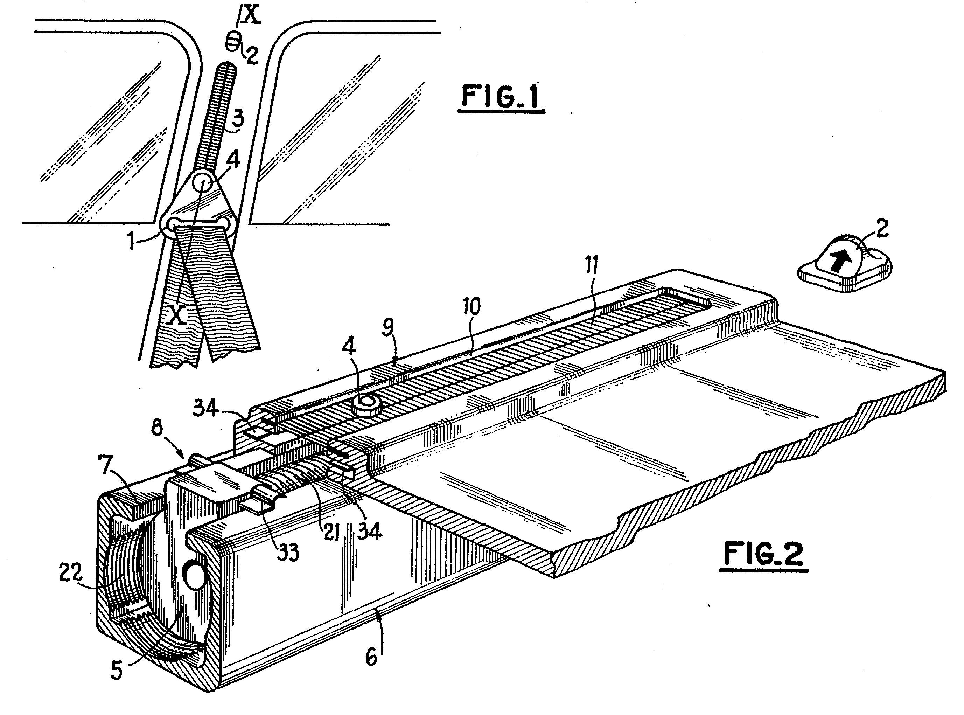

Comme on peut le voir sur la Fig.1, un renvoi de sangle 1 est monté déplaçable suivant un axe X-X entre deux positions extrêmes, sur un montant vertical d'un véhicule automobile. Un organe 2 de commande de la position de ce renvoi de sangle, qui sera décrit par la suite, est disposé par exemple au-dessus d'une fente 3 dans laquelle se déplace un doigt d'ancrage 4 du renvoi de sangle 1.

Le doigt d'ancrage 4 (Fig.2) est solidaire d'un moteur électrique 5 monté déplaçable axialement entre les deux positions extrêmes dans un tube 6 taraudé intérieurement fixé sur la carrosserie du véhicule. Ce tube présente dans sa partie supérieure, une fente 7 à travers laquelle font saillie le doigt d'ancrage 4 et une partie 8 de moyens d'alimentation de ce moteur électrique qui seront décrits plus en détail par la suite.

Un organe de support 9 isolant, fixé sur le tube 6, comporte une fente 10 ménagée en regard de la fente 7 du tube et des moyens déformables 11 de fermeture de cette fente 10. Le doigt d'ancrage 4 peut donc se déplacer avec le moteur entre les deux positions extrêmes de cette fente en déformant les moyens déformables 11 sur son passage, ces moyens reprenant leur position initiale après le passage de celui-ci, pour fermer cette fente. Ainsi, aucune poussière et aucun corps étranger ne peuvent s'introduire dans le mécanisme du dispositif selon l'invention.

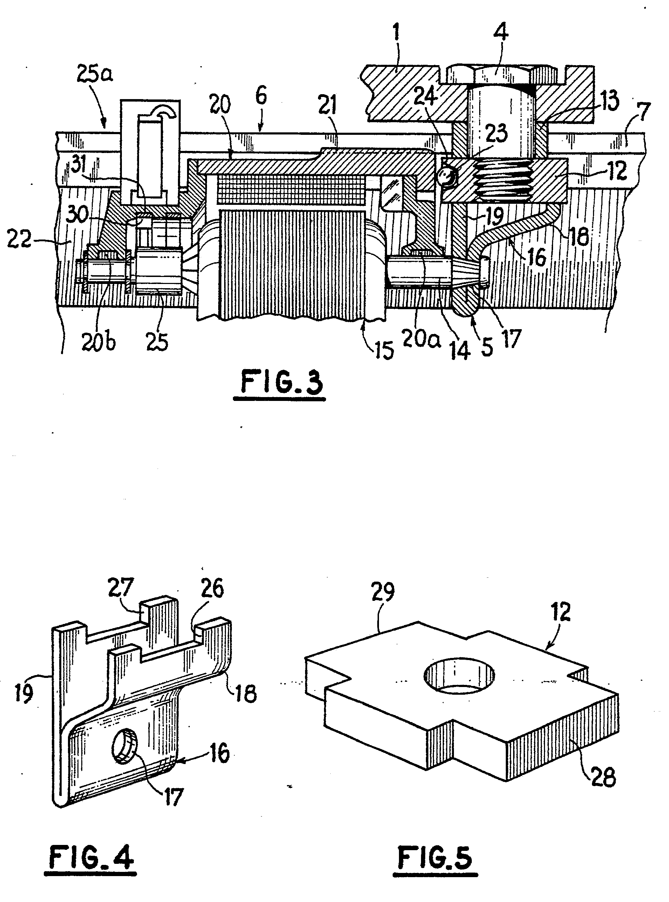

Comme il est représenté sur la Fig.3, le doigt d'ancrage 4 sur lequel est disposé le renvoi de sangle 1 comporte une extrémité qui fait saillie dans le tube 6 à travers la fente 7. Cette extrémité du doigt d'ancrage est par exemple vissée dans une pièce de liaison 12. Une entretoise 13 est disposée autour du doigt d'ancrage 4, entre cette pièce de liaison 12 et le renvoi de sangle 1, cette entretoise coopérant avec les rebords de la fente 7 du tube pour guider le doigt d'ancrage lors de son déplacement. Cette entretoise permet également de maintenir le renvoi de sangle à une distance prédéterminée de la pièce de liaison.

D'autre part, cette pièce de liaison 12 coopére avec les surfaces intérieures des rebords de la fente 7 du tube pour retenir le doigt d'ancrage en position.

Cette pièce de liaison 12 est fixée sur une extrémité d'un arbre 14 d'un induit 15 du moteur électrique 5 par l'intermédiaire d'une lame métallique 16 dont l'une des extrémités présente un évidement 17 engagé sur l'extrémite correspondante de l'arbre de l'induit et dont l'autre extrémité présente deux ai lettes 18 et 19 qui comme on le verra par la suite comportent des décrochements dans lesquels sont engagés des bossages de la pièce de liaison 12 pour entraîner cette pièce de liaison et donc le renvoi de sangle lorsque le moteur électrique se déplace à l'intérieur du tube.

Le moteur électrique 5 comporte également un inducteur 20 monté à rotation par l'intermédiaire de paliers 20ª et 20b autour de l'induit 15 et dont au moins une partie de la surface extérieure présente un filetage 21 coopérant avec un taraudage 22 formé dans la surface intérieure du tube 6.

Il est à noter que le doigt d'ancrage 4 étant solidaire de l'induit 15 du moteur électrique, cet induit est immobilisé en rotation. En effet, le doigt d'ancrage étant relié à l'arbre de l'induit et traversant la fente 7 du tube 6, il coopère avec les rebords de celle-ci pour empêcher toute rotation de l'induit.

Dans ce cas, lorsque le moteur électrique est alimenté, c'est l'inducteur 20 qui tourne autour de l'induit, de sorte que le filetage extérieur 21 de celui-ci coopère avec le taraudage intérieur 22 du tube pour assurer le déplacement de l'ensemble.

Il est également à noter que la surface de la pièce de liaison 12, disposée en regard d'une surface correspondante de l'inducteur 20, présente des moyens anti-friction de manière à limiter les frottements à ce niveau entre les deux pièces.

Ainsi par exemple, les moyens anti-friction sont constitués par une bille 23 disposée dans un logement 24 ménagé à cet effet dans la pièce de liaison 12.

Comme on le voit sur cette figure, l'autre extrémité de l'induit 15 présente un collecteur 25 permettant l'alimentation du moteur électrique. Les moyens d'alimentation 25a de ce collecteur, seront décrits plus en détail par la suite.

Sur les Fig.4 et 5, on a représenté plus en détail les moyens de fixation du doigt d'ancrage sur l'arbre de l'induit du moteur. Ainsi par exemple, la lame métallique 16 présente à l'une de ses extrémités l'évidement 17 destiné à être engagé sur l'extrémité correspondante dudit arbre. A son autre extrémité, cette lame métallique comporte les deux ailettes 18 et 19 présentant des décrochements 26 et 27 respectivement dans lesquels sont engagés des bossages 28 et 29 respectivement (Fig.5) de la pièce de liaison 12. Ainsi qu'il a déjà été mentionné, ces ailettes permettent de déplacer la pièce de liaison lorsque le moteur électrique se déplace à l'intérieur du tube de façon à transmettre ce déplacement au doigt d'ancrage 4 par l'intermédiaire de la pièce de liaison 12 et donc de déplacer le renvoi de sangle 1.

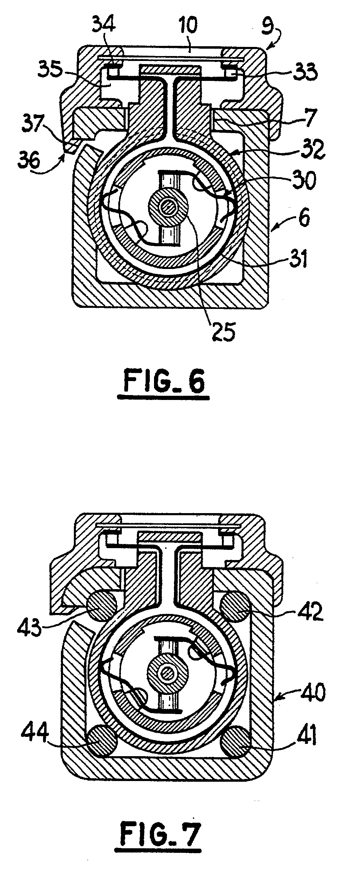

Comme il est représenté sur la Fig. 6,l'alimentation du collecteur 25 du moteur peut être assurée par un premier jeu 30 de frotteurs reliés au collecteur du moteur électrique, ces frotteurs étant en contact avec un premier jeu 31 de pistes conductrices disposées axialement sur la surface intérieure d'une bague 32 solidaire de l'induit du moteur, ces pistes conductrices étant reliées, par l'intermédiaire d'un second jeu 33 de frotteurs, à un second jeu 34 de pistes conductrices disposées de part et d'autre de la fente 7 du tube 6, et plus particulièrement le long de la fente 10 de l'organe de support 9, ce second jeu de pistes conductrices étant relié à la source d'alimentation du véhicule par l'intermédiaire de l'organe de commande 2 de la position du renvoi.

Cet organe de commande est constitué par exemple par un inverseur à trois positions permettant de connecter les pistes du second jeu 34 de pistes conductrices à la source d'alimentation, de manière que le moteur électrique et donc le renvoi de sangle se déplacent soit dans un sens, soit dans l'autre, suivant la polarité du jeu 34 de pistes, vers une position désirée et de couper cette alimentation lorsque cette position est atteinte pour immobiliser le moteur et déterminer ainsi une nouvelle position du renvoi de sangle.

Les pistes du second jeu 34 de pistes sont disposées de part et d'autre de la fente 10 de l'organe de support 9 dans des logements 35 ménagés à cet effet dans l'organe de support 9 fixé sur le tube 6 par l'intermédiaire de pattes de fixation 36 comportant des parties en saillie 37 coopérant avec des évidements ménagés à cet effet dans les parois latérales du tube.

Le jeu 33 de frotteurs se déplaçant avec le moteur lorsque celui-ci est alimenté, il est toujours en contact avec le jeu de pistes 34 de sorte que l'alimentation du moteur est assurée tant que l'inverseur n'est pas en position de repos. Ainsi l'organe de commande 2 de la position du renvoi de sangle permet d'obtenir un positionnement du renvoi de sangle en tout point de la course de celui-ci définie par les deux positions extrêmes.

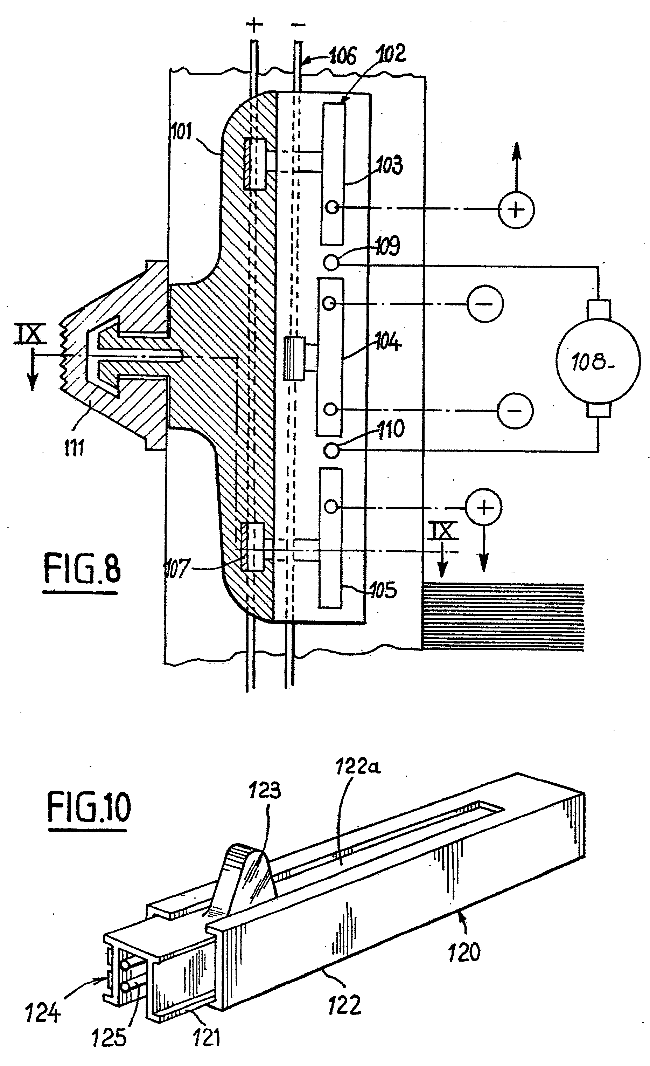

Selon une variante de réalisation représentée sur la Fig. 7, le moteur électrique est monté déplaçable à l'intérieur d'un tube 40 par exemple, de section, carrée, l'inducteur de ce moteur comportant un filetage extérieur coopérant par exemple avec quatre tiges filetées, 41 à 44, fixées dans les quatre angles dudit tube, respectivement, de manière à assurer le déplacement du moteur et donc du renvoi de sangle lors de la rotation de l'inducteur.

Il va de soi que trois tiges filetées, par exemple disposées à 120° l'une de l'autre, peuvent être suffisantes pour permettre le déplacement du moteur à l'intérieur du tube. Le tube peut également présenter une section autre que carrée.

Les autres éléments et le fonctionnement de ce mode de réalisation étant identiques à ceux du mode de réalisation précédent, on ne les décrira pas plus en détail.

Comme cela a été décrit précédemment, les moyens d'alimentation du moteur électrique, entrant dans la constitution d'un dispositif selon l'invention, comportent un premier jeu de frotteurs reliés au collecteur du moteur électrique, ces frotteurs étant en contact avec un premier jeu de pistes conductrices disposées axialement sur la surface intérieure d'une bague solidaire de l'induit du moteur.

Les éléments des moyens de commande qui seront décrits par la suite, constituent donc les moyens permettant de relier ces pistes conductrices de la bague à la source d'alimentation du véhicule.

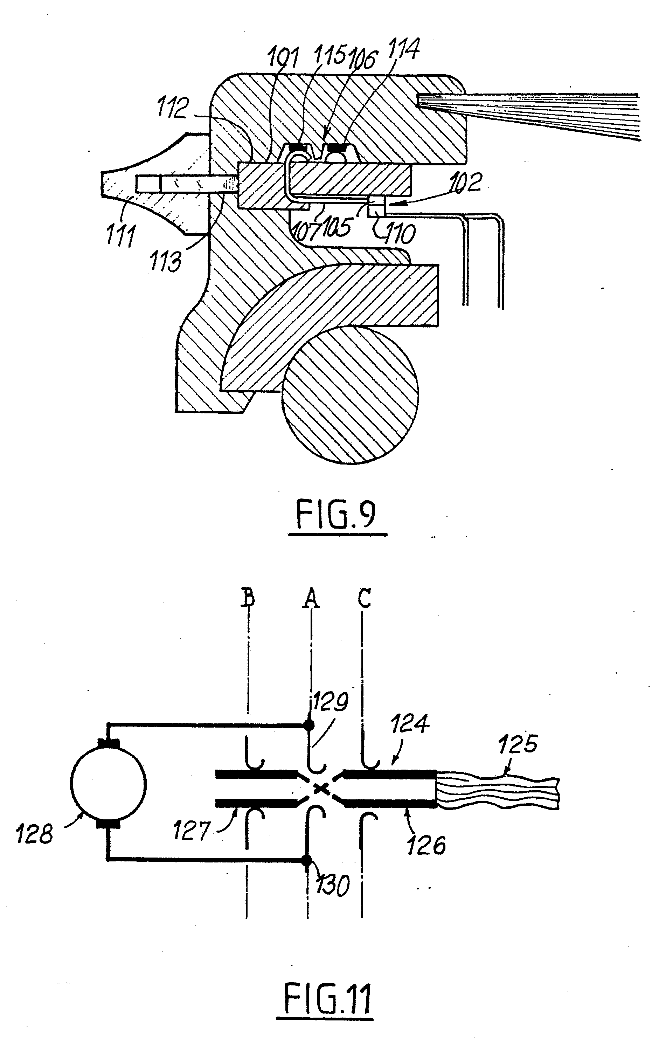

Selon le mode de réalisation représenté sur les Fig.8 et 9, l'organe de commande de la position du renvoi de sangle, comprend un tiroir 101 sur lequel est disposé un premier jeu 102 de trois pistes conductrices respectivement 103,104 et 105 à peu près alignées, séparées l'une de l'autre par un espace libre de coupure de l'alimentation du moteur électrique et connectées à la source d'alimentation du véhicule de manière à présenter des polarités alternées successivement. Ces pistes conductrices sont reliées à un second jeu 106 de pistes conductrices reliées aux bornes positive et négative de la source d'alimentation du véhicule, par l'intermédiaire de frotteurs, par exemple 107 pour la piste conductrice 105. Ainsi, dans l'exemple décrit, les pistes conductrices 103 et 105 présentent une polarité positive, tandis que la piste 104 présente une polarité négative.

Le moteur électrique 108 de déplacement du renvoi de sangle comporte deux frotteurs 109 et 110 reliant les pistes de la bague au reste de l'organe de commande et qui, comme il est représenté sur la Fig.8, sont en regard des espaces libres séparant les pistes conductrices l'une de l'autre. Ces frotteurs 109 et 110 sont destinés à coopérer avec les pistes conductrices 103,104 pour alimenter le moteur pour qu'il se déplace dans une certaine direction ou avec les pistes conductrices 104,105 pour alimenter celui-ci afin qu'il se déplace dans l'autre direction. Cette commande du moteur est fonction du déplacement du tiroir 101 par rapport aux frotteurs 109 et 110 d'alimentation du moteur. En effet, un curseur 111, solidaire du tiroir, est monté déplaçable manuellement le long de la course de réglage du renvoi de sangle, pour régler la position du tiroir 101 et donc des espaces libres de coupure de l'alimentation du moteur et déterminer ainsi sa position et donc celle du renvoi de sangle. En fonction du déplacement du curseur et donc du tiroir, le moteur électrique est alimenté soit dans un sens soit dans l'autre jusqu'à ce qu'il arrive dans la position de réglage désiré dans laquelle les curseurs 109 et 110 sont en regard des espaces libres de coupure de l'alimentation du moteur.

Comme on peut le voir plus clairement sur la Fig.9, le curseur 111 entraîne un déplacement du tiroir 101 qui se présente par exemple sous la forme d'une plaquette isolante, dans une glissière 112 d'une structure de support quelconque solidaire du véhicule. Cette structure de support comporte une fente 113 à travers laquelle fait saillie une partie du tiroir 101 sur laquelle est fixé le curseur 111. Les pistes conductrices du jeu 106 sont par exemple disposées dans des logements 114 et 115 ménagés à cet effet dans la structure de support.

Par ailleurs, pour des raisons de compréhension du fonctionnement du dispositif, on a représenté le frotteur 110 du moteur en appui sur la piste conductrice 105.

Ainsi qu'il a été décrit précédemment, le renvoi de sangle est solidaire du stator du moteur électrique et celui-ci est monté déplaçable axialement entre les deux positions extrêmes de sorte que le réglage de la position du curseur et donc des espaces libres de coupure de l'alimentation du moteur, permet d'obtenir un réglage de la position du renvoi de sangle.

Il est à noter que dans l'exemple de réalisation décrit, les frotteurs reliant le premier jeu 102 de pistes conductrices au second jeu 106, par exemple, le frotteur 107 pour la piste 105, traversent la plaquette isolante constituant le tiroir.

Les autres composants de ce dispositif étant identiques à ceux décrits précédemment, on ne les décrira pas plus en détail.

L'organe de commande 120 (Fig. 10) peut également comporter un tiroir 121 monté déplaçable à coulissement dans une glissière 122 par l'intermédiaire d'un curseur 123 faisant saillie hors de la glissière par une fente 122a ménagée à cet effet dans celle-ci, de sorte que l'utilisateur a accès à ce curseur pour déplacer manuellement le tiroir. Le tiroir 121 présente sur sa surface en regard du jeu de frotteurs reliant les pistes de la bague au reste de l'organe, des pistes conductrices 124 destinées à coopérer avec lesdits frotteurs pour alimenter le moteur électrique. Ces pistes conductrices sont reliées à la source d'alimentation du véhicule par exemple par des fils conducteurs 125.

Comme on peut le voir sur la Fig.11, le tiroir comporte deux jeux de pistes conductrices 126 et 127 connectés à la source d'alimentation du véhicule de manière à présenter des polarités inverses. Par ailleurs, les deux jeux de pistes sont séparés par un espace libre dans lequel les frotteurs d'alimentation du moteur 128 ne sont plus en contact avec les pistes conductrices, de sorte que l'alimentation du moteur électrique est coupée.

Le fonctionnement d'un tel dispositif est le suivant.

La position de repos du dispositif est celle référencée par A sur cette Fig.11, c'est à dire celle dans laquelle les frotteurs 129, 130 du moteur 128 sont en regard de l'espace libre séparant les deux jeux de pistes conductrices. Dans ce cas, le moteur n'est pas alimenté et le doigt d'ancrage et donc le renvoi de sangle sont dans une position déterminée.

Si l'on désire déplacer ce doigt d'ancrage soit vers le haut, soit vers le bas, on agit manuellement sur le curseur 123 pour déplacer le tiroir 121 dans la glissière 122 et donc les pistes conductrices 124 par rapport aux frotteurs 129,130 du moteur. On arrive alors par exemple dans la position référencée par B sur cette Fig.11, dans laquelle les frotteurs sont en contact avec le jeu 127 de pistes conductrices, de sorte que le moteur électrique 128 se déplace dans une certaine direction.

Le moteur se déplaçant, le doigt d'ancrage du renvoi de sangle et les frotteurs se déplacent alors également jusqu'à que les frotteurs arrivent à nouveau en regard de l'espace libre séparant les deux jeux de pistes conductrices.

L'alimentation du moteur est alors coupée et celui-ci s'immobilise en déterminant une nouvelle position du doigt d'ancrage du renvoi de sangle, en fonction du déplacement du curseur.

Dans le cas où l'on déplace le tiroir en sens inverse de celui mentionné précédemment, les frotteurs viennent en contact avec le jeu 126 de pistes conductrices comme représenté en C sur la Fig.11.

La polarité de ce jeu étant inverse à celle du jeu 127, le moteur électrique est donc alimenté en sens inverse et celui-ci se déplace alors en sens inverse de celui du cas précédent.

Le moteur se déplace dans l'autre direction tant que les frotteurs d'alimentation de celui-ci ne sont pas revenus en regard de l'espace libre séparant les deux jeux de pistes.

Il va de soi que le renvoi de sangle étant disposé sur un doigt d'ancrage solidaire de ce moteur, il suit également ce mouvement ce qui permet de régler sa position.

## Revendications

1. Dispositif de réglage de la position d'un renvoi de sangle (1) notamment de ceinture de sécurité pour véhicule automobile, dans lequel le renvoi de sangle est monté déplaçable entre deux positions extrêmes par l'intermédiaire de moyens d'entraînement comportant un moteur électrique (5; 108) alimenté par l'intermédiaire d'un organe de commande (2) de la position dudit renvoi (1), en tout point de la course de celui-ci, définie par les deux positions extrêmes, le renvoi de sangle (1) étant disposé sur un doigt d'ancrage (4), caractérisé en ce que le doigt d'ancrage est solidaire du moteur électrique (5; 108), ledit moteur électrique étant monté déplaçable axialement entre lesdites deux positions extrêmes, dans un tube (6; 40), et en ce qu'il est prévu des moyens d'immobilisation en rotation de l'induit (15) du moteur électrique, l'inducteur (20) de celui-ci étant monté à rotation autour de l'induit, en ce qu'au moins une partie de la surface extérieure de l'inducteur (20) du moteur présente un filetage (21) coopérant avec des moyens complémentaires (22; 41, 42, 43, 44) solidaires du tube (6; 40) de manière à assurer le déplacement du moteur et donc du renvoi de sangle lors de la rotation de l'inducteur, et en ce que les moyens d'immobilisation en rotation de l'induit sont constitués par le doigt d'ancrage (4) du renvoi de sangle (1), l'une des extrémités de ce doigt faisant saillie à l'intérieur du tube (6; 40) à travers une fente (7) ménagée dans celui-ci, cette extrémité du doigt d'ancrage étant reliée à l'une des extrémités de l'arbre (14) de l'induit (15) du moteur électrique par des moyens de fixation.

2. Dispositif selon la revendication 1, caractérisé en ce que lesdits moyens complémentaires sont constitués par un taraudage intérieur (22) du tube (6).

3. Dispositif selon la revendication 1, caractérisé en ce que les moyens complémentaires sont constitués par au moins trois tiges filetées (41,42,43,44) fixées dans le tube (40).

4. Dispositif selon la revendication 3, caractérisé en ce que le tube (40) présente une section carrée, et en ce que le filetage extérieur de l'inducteur du moteur coopère avec quatre tiges filetées (41;42,43,44) fixées dans les quatre angles du tube (40) de manière à assurer le déplacement du moteur.

5. Dispositif selon l'une quelconque des revendications précédentes, caractérisé en ce que les moyens d'immobilisation sont constitués par une lame métallique (16) dont l'une des extrémités est fixée sur l'extrémité correspondante de l'arbre (14) de l'induit (15) et dont l'autre extrémité présente deux ailettes (18, 19) comportant des décrochements (26, 27) dans lesquels sont engagés des bossages (28, 29) d'une pièce de liaison (12) solidaire de l'extrémité correspondante du doigt d'ancrage (4), cette pièce de liaison (12) coopérant avec les rebords de la fente (7) du tube (6 ; 40) pour retenir le doigt d'ancrage.

6. Dispositif selon la revendication 5, caractérisé en ce que la surface de la pièce de liaison (12) disposée en regard d'une surface correspondante de l'inducteur (20) du moteur électrique comporte des moyens anti-friction pour limiter les frottements entre ces pièces.

7. Dispositif selon la revendication 6, caractérisé en ce que les moyens anti-friction sont constitués par une bille (23) disposée dans un logement (24) ménagé dans la pièce de liaison (12) et coopérant avec la surface correspondante de l'inducteur (20) du moteur électrique.

8. Dispositif selon la revendication 5, caractérisé en ce qu'une entretoise (13) est disposée autour du doigt d'ancrage (4) entre la pièce de liaison (12) et le renvoi de sangle (1), cette entretoise coopérant avec les rebords de la fente (7) du tube pour guider le doigt d'ancrage (4) lors de son déplacement et maintenir le renvoi de sangle à une distance prédéterminée de la pièce de liaison (12).

9. Dispositif selon l'une quelconque des revendications précédentes, caractérisé en ce que les moyens d'alimentation (25a) du moteur électrique sont constitués par un premier jeu (30) de frotteurs reliés au collecteur (25) du moteur électrique (5), ces frotteurs étant en contact avec un premier jeu (31) de pistes conductrices disposées axialement sur la surface intérieure d'une bague (32) solidaire de l'induit (15) du moteur électrique, ces pistes conductrices étant reliées par l'intermédiaire d'un second jeu de frotteurs (33), à un second jeu de pistes conductrices (34) disposées selon le jeu de la fente (7) du tube (6 ;40) ce second jeu de pistes conductrices étant relié à la source d'alimentation du véhicule par l'intermédiaire de l'organe de commande (2) de la position du renvoi.

10. Dispositif selon la revendication 9, caractérisé en ce que ledit organe de commande (2) est constitué par un inverseur à trois positions, permettant de connecter les pistes du second jeu (34) à la source d'alimentation, de manière que le moteur électrique et donc le renvoi de sangle qui en est solidaire, se déplacent soit dans un sens, soit dans l'autre, vers la position désirée et de couper cette alimentation, lorsque cette position est atteinte.

11. Dispositif selon la revendication 9 ou 10, caractérisé en ce que les pistes du second jeu de pistes (34) sont disposées de part et d'autre de la fente (7) du tube (6 ; 40) dans des logements (35) ménagés dans un organe de support isolant (9) fixé sur le tube.

12. Dispositif selon la revendication 11, caractérisé en ce que l'organe de support (9) comporte une fente (10) ménagée en regard de la fente (7) du tube (6 ; 40) et des moyens déformables (10) de fermeture de la fente (10) de l'organe de support (9).

13. Dispositif selon l'une quelconque des revendications 1 à 8, caractérisé en ce que les moyens d'alimentation du moteur sont constitués par un premier jeu de frotteurs reliés au collecteur du moteur électrique, ces frotteurs étant en contact avec un premier jeu de pistes conductrices disposées axialement sur la surface intérieure d'une bague solidaire de l'induit du moteur électrique, ces pistes conductrices étant reliées à un second jeu de frotteurs (109,110;129,130) coopérant avec un second jeu de pistes conductrices (102;124) reliées à la source d'alimentation du véhicule pour alimenter le moteur, séparées les unes des autres par un espace libre de coupure de l'alimentation de celui-ci, et disposées sur un tiroir (101;121) monté déplaçable manuellement par l'intermédiaire d'un curseur (111; 123) le long de la course de réglage du renvoi de sangle, pour régler la coupure de l'alimentation du moteur et donc sa position ainsi que celle du renvoi de sangle.

14. Dispositif selon la revendication 13, caractérisé en ce que le tiroir (101;121) est monté déplaçable dans une glissière (112;122) solidaire du véhicule et comportant une fente (113;122a) à travers laquelle fait saillie une partie du tiroir (101;121) dont est solidaire un curseur (111;123), ledit curseur et ledit tiroir étant montés déplaçables manuellement le long de la course de réglage du renvoi de sangle pour régler la position des espaces libres de coupure de l'alimentation du moteur et de détermination de sa position et donc de celle du renvoi de sangle.

15. Dispositif selon la revendication 14, caractérisé en ce que le second jeu (124) de pistes conductrices est constitué par deux jeux de pistes conductrices (126,127) connectées à la source d'alimentation du véhicule de manière à présenter des polarités inverses et séparées par un espace libre de coupure de l'alimentation du moteur électrique.

16. Dispositif selon la revendication 14, caractérisé en ce que le second jeu (102) de pistes conductrices est constitué de trois pistes conductrices (103,104,105) à peu près alignées, séparées l'une de l'autre par un espace libre de coupure de l'alimentation du moteur électrique et connectées à la source d'alimentation du véhicule, de manière à présenter des polarités alternées successivement.

17. Dispositif selon la revendication 16, caractérisé en ce que le second jeu (102) de pistes conductrices est relié à la source d'alimentation du véhicule par l'intermédiaire d'un troisième jeu de frotteurs (107) coopérant avec un troisième jeu (106) de pistes conductrices reliées à la source d'alimentation.

## Claims

1. A device for adjusting the position of a strap return element (1) of in particular a safety belt for a motor vehicle, wherein the strap return element is mounted to be movable between two end positions by driving means comprising an electric motor (5; 108) supplied with current through a control element (2) for setting the position of said strap return element (1) at any point of the travel of the strap return element between the two end positions, the strap return element (1) being disposed on an anchoring pin (4), characterised in that the anchoring pin is secured to the electric motor (5; 108), said electric motor being mounted to be movable axially between said two end positions in a tube (6; 40), said device further comprising means for preventing the rotation of the armature (15) of the electric motor, the field magnet (20) of the motor being mounted to be rotatable about the armature, at least a part of the outer surface of the field magnet (20) of the motor carrying a screw thread (21) cooperating with complementary means (22; 41, 42, 43, 44) connected to the tube so as to displace the motor, and consequently the strap return element, when the field magnet rotates, and in that the means for preventing rotation of the armature includes the anchoring pin (4) of the strap return element (1), one of the end portions of this pin projecting into the tube (6; 40) through a slot (7) provided in the tube, said end portion of the anchoring pin being connected to one of the ends of the shaft (14) of the armature (15) of the electric motor by fixing means.

2. A device according to claim 1, characterised in that said complementary means consist of an integral screw thread (22) in the tube (6).

3. A device according to claim 1, characterised in that the complementary means consist of at least three screw-threaded rods (41, 42, 43, 44) fixed in the tube (40).

4. A device according to claim 3, characterised in that the tube (40) has a square sectional shape and the external screwthread of the field magnet of the motor cooperates with four screw-threaded rods (41, 42, 43, 44) fixed in the four corners of the tube (40) so as to displace the motor.

5. A device according to any one of the preceding claims, characterised in that the means for preventing rotation of the armature comprise a metal strip (16) having one end portion fixed to the corresponding end of the shaft (14) of the armature (15), and an opposite end portion having two wings (18, 19) defining recesses (26, 27) in which are engaged bosses (28, 29) of a connecting member (12) fixed to the corresponding end of the anchoring pin (4), said connecting member (12) cooperating with the edges of the slot (7) of the tube (6; 40) for retaining the anchoring pin.

6. A device according to claim 5, characaterised in that the surface of the connecting member (12) in facing relation to a corresponding surface of the field magnet (20) of the electric motor includes anti-friction means for limiting the friction between these components.

7. A device according to claim 6, characterised in that the anti-friction means comprise a ball (23) disposed in a cavity (24) provided in the connecting member (12) and cooperating with the corresponding surface of the field magnet (20) of the electric motor.

8. A device according to claim 5, characterised in that a spacer member (13) is disposed around the anchoring pin (4) between the connecting member (12) and the strap return element (1), said spacer member cooperating with edge portions of the slot (7) of the tube for guiding the anchoring pin (4) when it moves and maintaining the strap return element at a predetermined distance from the connecting member (12).

9. A device according to any one of the preceding claims, characterised in that the means (25a) supplying current to the electric motor comprise a first set of brushes (30) connected to the commutator (25) of the electric motor (5), said brushes being in contact with a first set of conductive tracks (31) axially disposed on the inner surface of a ring (32) connected to the armature (15) of the electric motor, said conductive tracks being connected through a second set of brushes (33) to a second set of conductive tracks (34) disposed along the slot (7) of the tube (6; 40), said second set of conductive tracks being connected to the power supply of the vehicle through the control element (2) for setting the position of the strap return element.

10. A device according to claim 9, characterised in that said control element (2) comprises an inverting switch having three positions which enables the tracks of the second set of tracks (34) to be connected to the power supply in such a way that the electric motor, and consequently the strap return element mounted thereon, move either in one direction or in the other direction to the desired position, and cuts off said supply when the desired position is reached.

11. A device according to claim 9 or 10, characterised in that the tracks of the second set of tracks (34) are disposed on each side of the slot (7) of the tube (6; 40) in recesses (35) provided in an insulating support member (9) fixed to the tube.

12. A device according to claim 11, characterised in that the support member (9) includes a slot (10) provided in facing relation to the slot (7) of the tube (6; 40) and deformable means (10) for closing the slot (10) of the support member (9).

13. A device according to any one of the claims 1 to 8, characterised in that the supply means of the motor comprise a first set of brushes connected to the commutator of the electric motor, said brushes being in contact with a first set of conductive tracks disposed axially on the inner surface of a ring connected to the armature of the electric motor, said conductive tracks being connected to a second set of brushes (109, 110; 129, 130) cooperating with a second set of conductive tracks (102; 124) connected to the power supply of the vehicle for supplying current to the motor, separated from each other by a gap for cutting off the supply of the motor and disposed on a slide (101; 121) mounted so as to be manually movable by means of a slider (111; 123) along the adjusting path of the strap return element, for adjusting the cutting off of the supply of the motor and hence its position and the position of the strap return element.

14. A device according to claim 13, characterised in that the slide (101; 121) is slidably mounted in a slideway (112; 122) integral with the vehicle and including a slot (113; 122a) through which projects a part of the slide (101; 121) with which a slider (111; 123) is connected, said slider and said slide being mounted to be manually movable along the adjusting path of the strap return element so as to adjust the position of the gaps for cutting off the supply to the motor and determining the position of the motor and hence the position of the strap return element.

15. A device according to claim 14, characterised in that the second set of conductive tracks (124) comprises two sets of conductive tracks (126, 127) connected to the power supply of the vehicle so as to have inverse polarities and separated by a gap for cutting off the supply to the electric motor.

16. A device according to claim 14, characterised in that the second set of conductive tracks (102) comprises by three conductive tracks (103, 104, 105) which are substantially in alignment, separated from one another by a gap for cutting off the supply to the electric motor and connected to the power supply of the vehicle so as to have inverse polarities and separated by a gap for cutting off the supply to the electric motor.

17. A devic according to claim 156, characterised in that the second set of conductive tracks (102) is connected to the power supply of the vehicle through a third set of brushes (107) which cooperate with a third set of conductive tracks (106) connected to the power supply.

## Patentansprüche

1. Vorrichtung zur Einstellung der Position eines Gurtumlenkbeschlags (1), insbesondere für einen Fahrzeugsicherheitsgurt, in der der Gurtumlenkbeschlag verschiebbar zwischen zwei Endpositionen mittels Antriebseinrichtungen ist, die einen Elektromotor (5; 108) aufweisen, der mittels eines Betätigungsorgans (2) der Stellung des Gurtumlenkbeschlags (1) auf jedem Punkt seiner Strecke versorgt wird, die durch die beiden Endpositionen definiert ist, wobei der Gurtumlenkbeschlag auf einem Ankerfinger (4) angeordnet ist, dadurch gekennzeichnet, daß der Ankerfinger mit dem Elektromotor (5; 108) verbunden ist, wobei der Elektromotor axial zwischen den beiden Endstellungen in einem Rohr (6; 40) verschiebbar ist, und daß Drehsperreinrichtungen des Ankers (15) des Elektromotors vorgesehen sind, wobei dessen Induktor (20) zur Drehung um den Anker angeordnet ist, daß wenigstens ein Bereich der Außenfläche des Induktors (20) des Motors ein Gewinde (21) aufweist, das mit komplementären Einrichtungen (22; 41, 42, 43, 44) zusammenwirkt, die mit dem Rohr (6; 40) derart verbunden sind, daß sie die Verschiebung des Motors und somit des Gurtumlenkbeschlags bei der Drehung des Induktors sicherstellen, und daß die Drehsperreinrichtungen des Ankers durch den Ankerfinger des Gurtumlenkbeschlags (1) gebildet sind, wobei ein Ende des Rohrs (6; 40) durch einen Spalt (7) vorspringt, der in diesem ausgebildet ist, wobei dieses Ende des Ankerfingers mit einem der Enden der Welle (14) des Ankers (15) des Elektromotors durch Festlegeeinrichtungen verbunden ist.

2. Vorrichtung nach Anspruch 1, dadurch gekennzeichnet, daß die komplementären Einrichtungen durch ein Gewinde (22) im Inneren des Rohrs (6) ausgebildet sind.

3. Vorrichtung nach Anspruch 1, dadurch gekennzeichnet, daß die komplementären Einrichtungen wenigstens aus drei Gewindespindeln (41, 42, 43, 44) gebildet sind, die in dem Rohr (40) befestigt sind.

4. Vorrichtung nach Anspruch 3, dadurch gekennzeichnet, daß das Rohr (40) eine Rechteckform aufweist, und daß das Außengewinde des Induktors des Motors mit vier Gewindespindeln (41, 42, 43, 44) zusammenwirkt, die in den vier Ecken des Rohres (40) derart fixiert sind, daß sie die Verschiebung des Motors sicherstellen.

5. Vorrichtung nach einem der vorhergehenden Ansprüche, dadurch gekennzeichnet, daß die Drehsperreinrichtungen durch eine metallische Zunge (16) gebildet sind, deren eines Ende an dem entsprechenden Ende der Welle (14) des Ankers (15) befestigt ist, und deren anders Ende zwei Schenkel (18, 19) aufweist, welche Absätze (26, 27) aufweisen, in denen Buckel oder Vorsprünge (28, 29) eines Verbindungsstücks (12) eingreifen, welches mit dem entsprechenden Ende des Ankerfingers (4) verbunden sind, wobei das Verbindungsstück (12) mit den Rändern des Spalts (7) des Rohrs (6; 40) zusammenwirkt, um den Ankerfinger zurückzuhalten.

6. Vorrichtung nach Anspruch 5, dadurch gekennzeichnet, daß die Oberfläche des Verbindungsstücks (12), welche gegenüberliegend einer entsprechenden Fläche des Induktors (20) des Elektromotors angeordnet ist, Antireibungseinrichtungen aufweist, um die Reibungen zwischen den Teilen zu begrenzen.

7. Vorrichtung nach Anspruch 6, dadurch gekennzeichnet, daß die Antireibungsmittel aus einer Kugel (23) gebildet sind, die in einem Lager (24) angeordnet ist, das in dem Verbindungsstück (12) ausgebildet ist und mit der entsprechenden Fläche des Induktors (20) des Elektromotors zusammenwirkt.

8. Vorrichtung nach Anspruch 5, dadurch gekennzeichnet, daß eine Abstandshülse (13) um den Ankerfinger (4) zwischen dem Verbindungsstück und dem Gurtumlenkbeschlag (1) angeordnet ist, wobei diese Abstandshülse mit den Rändern des Spaltes (7) des Rohres zusammenwirkt, um den Ankerfinger (4) während seiner Verschiebung zu führen und den Gurtumlenkbeschlag auf einem bestimmten Abstand von dem Verbindungsstück (12) zu halten.

9. Vorrichtung nach einem der vorhergehenden Ansprüche, dadurch gekennzeichnet, daß die Zuführeinrichtung (25a) des Elektromotors aus einem ersten Satz (30) von Schleiffedern gebildet sind, die mit dem Kollektor (25) des Elektromotors (5) verbunden sind, wobei die Schleiffedern in Kontakt mit einem ersten Satz (31) von Leiterbahnen stehen, die axial auf der Innenfläche eines Rings (32) angeordnet sind, der mit dem Anker (15) des Elektromotors verbunden ist, wobei die Leiterbahnen mittels einem zweiten Satz von Schleiffedern (33) mit einem zweiten Satz von Leiterbahnen (34) verbunden sind, die entlang des Spalts (7) des Rohrs (6; 40) angeordnet sind, wobei der zweite Satz der Leiterbahnen mit der Zuführ- oder Energiequelle des Fahrzeugs mittels des Betätigungsorgans (2) der Stellung des Gurtumlenkbeschlags verbunden ist.

10. Vorrichtung nach Anspruch 9, dadurch gekennzeichnet, daß das Betätigungsorgan (2) aus einem Umkehrgetriebe mit drei Stellungen gebildet ist, was erlaubt die Bahnen des zweiten Satzes (34) mit der Energiequelle derart zu verbinden, daß der Elektromotor und somit der Gurtumlenkbeschlag, der mit diesem verbunden ist, sich entweder in die eine oder in die andere Richtung auf die gewünschte Position hinbewegen, und erlaubt diese Zufuhr zu unterbrechen, wenn die Stellung erreicht ist.

11. Vorrichtung nach Anspruch 9 oder 10, dadurch gekennzeichnet, daß die Bahnen des zweitend Leiterbahnensatzes (34) einerseits und andererseits des Spalts (7) des Rohres (6; 40) in Lagern (35) angeordnet sind, die in einem isolierenden Lagerorgan (9) ausgebildet ist, das an dem Rohr befestigt ist.

12. Vorrichtung nach Anspruch 11, dadurch gekennzeichnet, daß das Lagerorgan (9) einen Spalt (10) aufweist, der dem Spalt (7) des Rohres (6; 40) gegenüberliegend ausgebildet ist und deformierbare Einrichtungen (11) zur Verschließung des Spaltes (10) des Lagerorgans (9) aufweist.

13. Vorrichtung nach einem der Ansprüche 1 bis 8, dadurch gekennzeichnet, daß die Zuführeinrichtungen des Motors aus einem ersten Satz von Schleiffedern gebildet ist, die mit dem Kollektor des Elektromotors verbunden sind, wobei die Schleiffedern in Kontakt mit einem ersten Satz von Leiterbahnen steht, die axial auf der Innenfläche eines Rings ausgebildet sind, der mit dem Anker des Elektromotors verbunden ist, wobei die Leiterbahnen mit einem zweiten Satz von Schleiffedern (109, 110; 129, 130) verbunden sind, die mit einem zweiten Satz von Leiterbahnen (102; 124) zusammenwirken, die mit der Zuführquelle des Fahrzeugs verbunden sind, um den Motor zu speisen, wobei sie voneinander durch einen Freiraum zur Trennung seiner Zufuhr getrennt und auf einem Fachschieber (101; 121) angeordnet sind, der manuell mittels eines Schiebers (111; 123) entlang der Regelungsstrecke des Gurtumlenkbeschlages verschiebbar bzw. bewegbar ist, um die Unterbrechung der Speisung des Motors und so seine Stellung sowie jene des Gurtumlenkbeschlags zu regeln.

14. Vorrichtung nach Anspruch 13, dadurch gekennzeichnet, daß der Fachschieber (101; 121) in einer Gleitschiene (112; 122) verschiebbar angeordnet ist, die mit dem Fahrzeug verbunden ist und einen Spalt (113; 122a) aufweist, durch den ein Abschnitt des Fachschiebers (101; 121) vorspringt, mit dem ein Schieber (111; 123) verbunden ist, wobei der Schieber und der Fachschieber manuell verschiebbar entlang der Einstell- oder Regelungsstrecke des Gurtumlenkbeschlags angeordnet sind, um die Position der freien Räume zur Trennung der Zufuhr des Motors und die Bestimmung seiner Position und somit jener des Gurtumlenkbeschlags zu regeln.

15. Vorrichtung nach Anspruch 14, dadurch gekennzeichnet, daß der zweite Satz (124) der Leiterbahnen aus zwei Sätzen von Leiterbahnen (126, 127) gebildet sind, die mit der Energiequelle des Fahrzeugs derart verbunden sind, um umgekehrte und durch einen Freiraum der Trennung der Zufuhr des Elektromotors getrennt sind.

16. Vorrichtung nach anspruch 14, dadurch gekennzeichnet, daß der zweite Satz (102) der Leiterbahnen aus drei ungefähr ausgerichteten Leiterbahnen (103, 104, 105) gebildet ist, welche voneinander durch einen Freiraum der Trennung der Zufuhr des Elektromotors getrennt und mit der Energiequelle des Motors derart verbunden sind, daß sie aufeinanderfolgend abwechselnde Polaritäten aufweisen.

17. Vorrichtung nach Anspruch 16, dadurch gekennzeichnet, daß der zweite Satz (102) der Leiterbahnen mit der Stromquelle des Fahrzeugs durch einen dritten Satz von Schleiffedern (107) verbunden ist, welche mit einem dritten Satz (106) von Leiterbahnen zusammenwirken, die mit der Energie- oder Stomquelle verbunden sind.

**FIG.1**

**FIG.2**

EP 0 227 500 B1

EP 0 227 500 B1

**FIG.3**

**FIG.4**

**FIG.5**

FIG. 6

FIG. 7

FIG.8

FIG.10

EP 0 227 500 B1

FIG.9

FIG.11